Europäisches Patentamt

European Patent Office

Office européen des brevets

(11) Numéro de publication: **0 425 328 A1**

## DEMANDE DE BREVET EUROPEEN

(21) Numéro de dépôt: 90402690.3

(22) Date de dépôt: **28.09.90**

(51) Int. Cl.5: **G01F 25/00, G01F 15/06**

(30) Priorité: 17.10.89 FR 8913565

(43) Date de publication de la demande:
**02.05.91 Bulletin 91/18**

(84) Etats contractants désignés:
**AT BE CH DE DK ES GB GR IT LI LU NL SE**

(71) Demandeur: **MESURE, CONTROLE ET AUTOMATISME MESTROLE**
**Rue Pierre et Marie Curie**

**F-76650 Le Petit Couronne(FR)**

(72) Inventeur: **Maingot, Georges, Fernand Didier**
**27 avenue de Normandie**
**F-78450 Villepreux(FR)**

(74) Mandataire: **Beauchamps, Georges et al**
**Cabinet Z.Weinstein 20, avenue de Friedland**
**F-75008 Paris(FR)**

(54) **Procédé et dispositif d'étalonnage d'un compteur volumétrique de produits liquides quelconques.**

(57) La présente invention concerne un procédé et un dispositif d'étalonnage d'un compteur de liquide.

Le dispositif selon cette invention comprend essentiellement une enceinte (8) contenant un piston (11) et raccordable hydrauliquement à l'organe de mesure (2) d'un compteur (1), le piston (11) étant un piston-plongeur de section transversale inférieure à celle de l'enceinte (8) et étant monté coulissant de façon étanche au travers d'une paroi (9) montée transversalement dans l'enceinte (8) pour y définir deux capacités étanches (8a, 8b) entre lesquelles se déplace de façon plongeante le piston (11).

Le procédé et le dispositif selon cette invention s'appliquent notamment à l'étalonnage d'un compteur de liquide volumétrique.

FIG. 1

# PROCÉDÉ ET DISPOSITIF D'ÉTALONNAGE D'UN COMPTEUR VOLUMÉTRIQUE DE PRODUITS LIQUIDES QUELCONQUES.

La présente invention a essentiellement pour objet un procédé d'étalonnage d'un compteur de liquide, en particulier d'un compteur volumétrique

Elle vise également un dispositif d'étalonnage pour la mise en oeuvre de ce procédé.

On sait que l'opération détalonnage d'un compteur de liquide a pour but de permettre d'ajuster la valeur du volume de liquide indiqué sur le compteur à la valeur vraie du volume de liquide qui a effectivement traversé le compteur

Cette opération d'étalonnage peut être effectuée tant sur les compteurs volumétriques que sur les compteurs à turbine que l'on trouve actuellement sur le marché.

Il est déjà connu d'effectuer l'étalonnage à l'aide d'un piston se déplaçant entre deux positions fixes dans un cylindre et qui engendre un volume comparé avec une valeur interpolée du volume indiqué sur le compteur.

Mais ce système a un inconvénient, notamment dans le cas des compteurs volumétriques, car la méthode d'interpolation est incompatible avec la précision voulue d'étalonnage.

On connait par ailleurs des systèmes d'étalonnage à piston coulissant dans un cylindre raccordé au compteur et dont le volume peut être fractionné pour s'adapter à une valeur prédéterminée du volume lu sur le compteur.

Toutefois, un tel système ne permet pas d'arriver à la précision d'étalonnage recherchée, en raison du défaut de cylindricité du cylindre dans lequel coulisse le piston, et également en raison de la distorsion de fonctionnement qui existe entre l'organe de mesure du compteur et l'indicateur de volume de ce compteur, et cela dans le cas des compteurs volumétriques qui sont généralement munis d une chaîne cinématique d'entraînement avec pignonerie génératrice de perturbations, et sur laquelle est généralement prévue un système de réglage permettant d'ajuster la valeur du volume lu sur l'indicateur du compteur à la valeur vraie du volume de liquide ayant traversé ce compteur.

La présente invention a pour but de remédier aux inconvénients ci-dessus en proposant un procédé et un dispositif d'étalonnage dun compteur volumétrique ou même à turbine, qui permettent d'obtenir un degré très élevé de précision, et cela avec une excellente fiabilité d'étalonnage d'un compteur ou d'un autre.

A cet effet, l'invention a pour objet un procédé d'étalonnage d'un compteur notamment volumétrique de type quelconque pour liquide et comprenant essentiellement un organe de mesure et un indicateur de volume reliés par un système mécanique quelconque engendrant nécessairement une erreur sur le volume lu sur l'indicateur par rapport au volume vrai passant dans l'organe de mesure, cette erreur pouvant être corrigée par un système de réglage, ce procédé étant essentiellement caractérisé en ce qu'on établit le rapport du nombre d'impulsions produites d'une part par un premier générateur dimpulsions disposé entre l'organe de mesure et le système de réglage, et d'autre part par un deuxième générateur d'impulsions entraîné par l'indicateur produisant une information perturbée, cela de façon à quantifier en valeur de volume lu sur l'indicateur l'information non perturbée émise par le premier générateur d impulsions, pour ainsi déterminer avec le degré de précision requis la valeur du volume lu à comparer avec le volume vrai ayant traversé l'organe de mesure qui provoque directement l'entraînement du premier générateur d'impulsions.

Ce procédé est encore caractérisé en ce que le volume de liquide traversant l'organe de mesure actionne un piston coulissant dans une enceinte et dont le déplacement, matérialisant le volume vrai de liquide ayant traversé l'organe de mesure, est mesuré sur une distance comprenant trois zones définies par quatre limites elles-mêmes définies par rapport à une origine de mesure de référence, de façon que la mesure du déplacement du piston commençant nécessairement dans la première zone et se terminant nécessairement dans la troisième zone, inclut la mesure dune zone intermédiaire fixe en position et en grandeur pour ainsi rendre négligeables les erreurs de mesure imputables aux lectures de mesure du déplacement du piston.

L'invention vise également un dispositif d'étalonnage d'un compteur notamment volumétrique de type quelconque pour liquide, pour la mise en oeuvre du procédé répondant aux caractéristiques ci-dessus, et comprenant une enceinte contenant un piston et raccordable hydrauliquement à l'organe de mesure du compteur, ce dispositif étant essentiellement caractérisé en ce que ledit piston est un piston-plongeur de section transversale inférieure à celle de l'enceinte et monté coulissant de façon étanche au travers d'au moins une paroi montée transversalement dans l'enceinte pour y définir au moins deux capacités étanches

Suivant une autre caractéristique de ce dispositif, les deux capacités précitées, qui sont raccordables au circuit de transport du liquide passant dans l'organe de mesure du compteur, communiquent entre elles par au moins une conduite pourvue d'au moins un clapet agencé suivant l'axe du piston et permettant un écoulement progressif du liquide d'une capacité vers l'autre ou son interruption.

On précisera encore ici que le piston est attelé à un premier chariot coulissant sur des guides parallèlement à une règle de mesure incrémentale, et qui peut être rappelé par un deuxième chariot motorisé.

Selon encore une autre caractéristique importante, le dispositif de cette invention comprend un premier générateur d'impulsions directement couplé au mouvement de l'organe de mesure du compteur, ainsi qu'un deuxième générateur d'impulsions directement couplé à l'indicateur de volume du compteur, ces deux générateurs adressant respectivement leurs informations à un calculateur, de même que les informations provenant de la règle de mesure précitée sont adressées à ce calculateur

Selon encore une autre caractéristique de cette invention, le piston possède une cavité intérieure débouchant à l'une des extrémités du piston, laquelle extrémité est munie d'une butée apte à coopérer avec le clapet précité.

Il faut encore observer ici que le raccordement d'entrée de liquide à l'une des capacités de l'enceinte est avantageusement un raccordement à injection tangentielle permettant une centrifugation du liquide pénétrant dans l'enceinte pour ainsi diriger les particules solides en suspension dans le liquide vers les parois de l'enceinte, et non vers le piston, ce qui évite l'endommagement de la surface externe de celui-ci.

Suivant encore une autre caractéristique de l'invention. on associe au clapet précité, agencé dans l'axe de coulissement du piston, un système de controle du clapet en position de fermeture.

On peut encore prévoir suivant l'invention, un conduit associé à une source de pression, lequel conduit communique avec l'interface entre l'ouverture de la paroi dans laquelle coulisse le piston et la surface externe de celui-ci, et débouche entre deux joints d'étanchéité disposés dans cette ouverture.

Ainsi, on pourra soulager avantageusement les deux joints d'étanchéité, et par conséquent réduire les effets néfastes de frottement des joints d'étanchéité sur le piston, tout en maintenant l'étanchéité entre paroi et piston coulissant dans cette paroi.

Mais d'autres avantages et caractéristiques de l'invention apparaîtront mieux dans la description détaillée qui suit et se réfère aux dessins annexés, donnés uniquement à titre d'exemple, et dans lesquels :

La figure 1 est une vue schématique dune installation d'étalonnage conforme à cette invention et montrée en position raccordée à un compteur que l'on désire étalonner.

La figure 2 est une vue en coupe suivant sensiblement la ligne II-II de la figure 1.

La figure 3 est un schéma illustrant en partie supérieure la course de la tête de lecture sur la règle incrémentale et en partie inférieure la position des informations adressées au calculateur par la tête de lecture.

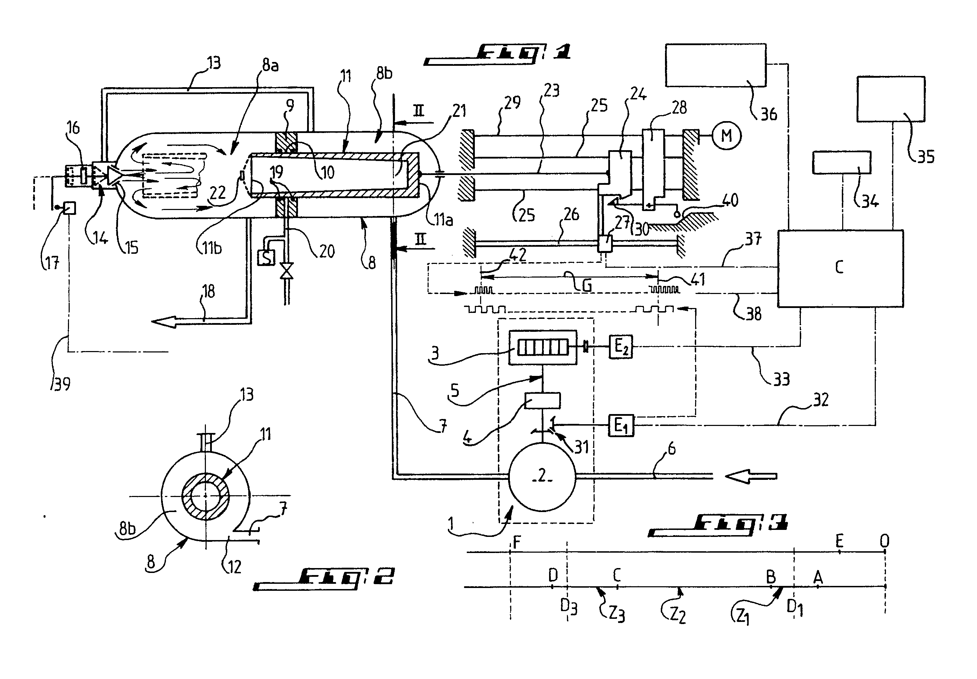

Suivant l'exemple de réalisation représenté sur la figure 1, un dispositif d'étalonnage conforme aux principes de l'invention est raccordé à un compteur volumétrique 1 qui, comme connu en soi, comprend un organe de mesure 2, un indicateur 3 de la valeur du volume de liquide passant dans l'organe de mesure 2, et un système de réglage 4 entre indicateur 3 et organe de mesure 2, lequel système peut agir sur une chaîne cinématique avec pignonerie montrée schématiquement en 5 et reliant l'organe de mesure 2 à l'indicateur 3.

L'organe de mesure 2 reçoit un liquide quelconque par une conduite 6, lequel liquide soit par une conduite 7 pour aboutir dans une enceinte 8 constituant la jauge d'étalonnage selon cette invention.

Dans l'enceinte 8 est montée transversalement une paroi ou cloison 9 avec ouverture 10 dans laquelle est monté coulissant un piston-plongeur 11 qui, comme on le voit bien sur la figure, possède un diamètre plus petit que celui de l'enceinte 8.

Comme il apparaît clairement sur la figure 2, la conduite 7 débouche dans l'enceinte 8 par un raccordement 12 à injection tangentielle.

La paroi ou cloison 9 définit dans l'enceinte 8 deux capacités étanches 8a, 8b. Le raccordement tangentiel 12 de la conduite 7 aboutissant dans le compartiment 8b permet de faire subir au liquide entrant dans ce compartiment un mouvement tourbillonnaire et circulaire, de sorte que les particules éventuellement en suspension dans le liquide ne pourront pas altérer la surface extérieure du piston 11 puisqu'elles seront nécessairement projetées vers la surface interne de l'enceinte 8 d'où elles pourront être évacuées.

La capacité étanche 8b communique avec l'autre capacité étanche 8a par une conduite 13, et cela par l'intermédiaire d'un clapet 14 solidaire de l'enceinte 8 et agencé suivant l'axe de coulissement du piston-plongeur 11. Ce clapet 14, comme on le voit bien sur la figure, coopère avec un siège 15 solidaire de la paroi de l'enceinte 8, et il comprend un système d'asservissement 16 coopérant avec un contacteur 17, de façon à contrôler la fermeture du clapet et à valider la mesure de l'étalonnage, comme on l'expliquera plus loin à propos du fonctionnement.

On a montré en ·18 un conduit de sortie du liquide de la capacité 8a de l'enceinte. Bien entendu, sans sortir du cadre de l'invention, le compteur 1 à étalonner pourrait être placé indifféremment en amont ou en aval de la jauge ou enceinte d'étalonnage 8.

L'étanchéité du piston-plongeur 11 vis-à-vis de l'ouverture 10 de la paroi 9 est assurée par deux joints 19 entre lesquels peut déboucher une conduite 20 reliée à une source de pression 5, telle que par exemple une pompe.

Ainsi, un fluide sous pression pourra éventuellement alimenter l'interface entre piston 11 et ouverture 10, et cela entre les deux joints 19, comme on le voit bien sur la figure, de façon à soulager en quelque sorte les deux joints 19 et éviter les effets de frottement sur la surface externe du piston 11, ce qui serait préjudiciable à la mesure détalonnage. On observera ici que la conduite 20 peut également et avantageusement être utilisée pour contrôler l'étanchéité entre les deux joints 19 et cela pendant les mouvements de coulissement du piston-plongeur 11. On insistera ici sur le fait que la jauge d'étalonnage selon cette invention est extrêmement avantageuse pour ce qui est de la précision de l'étalonnage, car le piston il peut être fabriqué par usinage extérieur, ce qui garantit une parfaite géométrie. Autrement dit, selon la présente invention, on n'a pas besoin d'usiner un ensemble piston-cylindre avec tous les aléas de cylindricité que cela présente.

Le piston-plongeur 11 est évidé de façon à former une cavité intérieure 21, de préférence tronconique, et débouchant par une extrémité dans la capacité 8a, cette extrémité étant munie d'une butée montrée schématiquement en 22 et susceptible d'actionner le clapet 14 pour forcer son ouverture en cas de défaillance du système d'asservissement 16, de sorte que le liquide passant dans la conduite 13 est automatiquement évacué par le conduit 18.

L'autre extrémité non débouchante du piston 21 est attelée par une tige ou analogue 23 à un premier chariot 24 pouvant se déplacer sur deux guides parallèles représentés schématiquement en 25. Ce premier chariot coulisse sur les guides 25 parallèlement à une règle de mesure incrémentale 26. Une tête de lecture 27 de la règle 26 est mécaniquement reliée, par tout moyen approprié, au premier chariot 24.

On a montré en 28 un deuxième chariot coulissant sur les guides 25 et qui peut être entraîné par un moteur M et une vis à bille 29, de façon à permettre le rappel du premier chariot 24 lorsque le piston-plongeur 11 est en fin de course, c'est-à-dire situé pour sa majeur partie à l'intérieur de la capacité 8a de l'enceinte 8. Plus précisément, le deuxième chariot 28 comporte un système d'accrochage montré schématiquement en 30 et pouvant coopérer avec le premier chariot 24 pour rappeler le piston 11 vers la position de lancement, c'est-à-dire la position représentée sur la figure 1.

On a montré en E₁ un premier générateur d'impulsions directement relié par tout moyen approprié au mécanisme d'entraînement de l'organe de mesure 2, de sorte que l'entraînement du générateur E₁ ne sera pas influencé ni perturbé par la chaîne cinématique ou pignonerie 5 entre l'organe de mesure 2 et l'indicateur 3. Les impulsions produites par le générateur E₁ sont envoyées à un calculateur C par la ligne 32.

On a montré en E₂ un deuxième générateur d'impulsions qui est directement couplé à l'indicateur 3 et dont les signaux ou impulsions sont envoyés au calculateur C par la ligne 33. Ce calculateur C comprend, comme connu en soi, un clavier 34, un écran de visualisation 35 et une imprimante 36.

On observera encore qu'à ce calculateur C, sont envoyées les informations provenant de la tête de lecture 27, comme matérialisé par la ligne 37. Le calculateur C peut encore gérer des informations lui parvenant par la ligne 38 et provenant d'appareils divers de mesure de la pression et de la température en différents points de l'installation.

Enfin on a montré en 39 une ligne reliant le contacteur 17 au calculateur C.

Ayant ainsi décrit l'installation d'étalonnage selon cette invention, on en expliquera maintenant le fonctionnement.

On partira de la position visible sur la figure 1, et dans laquelle le piston-plongeur 11 est en fin de cycle de réarmement, c'est-à-dire que le premier chariot 24 est encore rappelé par le deuxième chariot 28 vers la droite de la figure 1.

Lorsque le système d'accrochage 30 formant levier est sollicité par la came de fin de course repérée en 40, le premier chariot 24 se sépare du premier chariot 28 qui continue sa course vers la droite de la figure 1.

Le chariot 24 se trouve donc dans la position initiale de lancement, c'est-à-dire dans la position prête à commencer une mesure. A ce stade, on notera que le clapet 14 est en position ouverte, comme montré en traits pointillés sur la figure 1, et cela sous l'effet du système d'asservissement 16.

Le liquide ayant traversé le compteur et passant dans la conduite 7 pénètre dans la capacité 8b et en ressort librement par la conduite 13 pour passer par l'intermédiaire du clapet 14 ouvert dans la capacité 8a d'où il ressort par le conduit 18.

Lorsque l'opérateur désire commencer la mesure, il commande la fermeture du clapet 14 en agissant sur le système d'asservissement 16. La restriction progressive de l'écoulement au travers du clapet 14 provoquera alors une augmentation de la perte de charge entre les capacités 8a et 8b, de sorte que le piston 11, subissant à son extrémité lia une pression supérieure à celle appliquée sur son extrémité débouchante 11b, se déplacera ou plongera tout d'abord progressivement vers la capacité 8a. Puis, la vitesse progressive du piston 11 atteindra son maximum lorsque le clapet 14 sera totalement fermé. Cette vitesse correspond au débit de liquide sortant de l'organe de mesure 2 du compteur 1. Bien entendu, le volume de liquide chassé par le piston 11 de la capacité 8a est refoulé par le conduit 18. Lorsque le piston 11 arrivera en fin de course de mesure, le premier chariot 24 rencontrera un contacteur (non représenté) qui commandera le système d'asservissement 16 pour ouvrir à nouveau le clapet 14. Le liquide arrivant dans la capacité 8b s'écoulera à nouveau par la conduite 13 jusqu'au clapet 14 pour en sortir et effectuer à l'intérieur de la cavité 21 du piston 11, comme matérialisé par des traits pointillés et des flèches sur la figure 1, un aller et retour réduisant ainsi la vitesse du jet de liquide et amortissant la course du piston.

Pour réarmer l'installation, le chariot 28 sera entraîné par le moteur M jusqu'à l'accostage avec le chariot 24 qu'il ramènera à la position visible sur la figure 1, et le cycle pourra recommencer.

On expliquera maintenant comment s'effectue la mesure en s'aidant de la figure 3.

Lors du déplacement du chariot 24 sous l'effet du déplacement du piston 11 par le liquide sortant de l'organe de mesure 2, la tête de lecture 27 lisant la règle incrémentale 26, et les deux générateurs d'impulsions E1 et E2 transmettent des informations au calculateur C.

Il convient de noter ici que, quelle que soit la position du chariot 24, c'est-à-dire qu'il soit au repos ou en mouvement, les générateurs d'impulsions $E_1$ et $E_2$ transmettront en permanence des impulsions au calculateur C, en raison du fait que l'organe de mesure 2 reçoit en permanence du liquide en 6, même si le piston 11 n'est pas en mouvement.

Dans un premier temps, et sur un essai portant sur un très grand volume de liquide, le calculateur C établit le rapport existant entre les nombres d'impulsions émises par les générateurs $E_1$ et $E_2$, pour une même période de temps. Ce rapport permettra de déterminer la valeur du rapport d'entraînement au niveau du système de règlage 4. En outre, la définition des impulsions émises par le générateur d'impulsions $E_2$ correspond à une valeur connue et constante de litres lus sur l'indicateur 3. En conséquence, le calculateur C peut quantifier un nombre quelconque dimpulsions émises par le générateur $E_1$ en valeur de volume lu à l'indicateur 3, quelle que soit la valeur du rapport d'entraînement au niveau du système de règlage 4.

Lors du déplacement du chariot 24 et donc de la tête de lecture 27 sur la règle 26, ladite tête de lecture franchit une position qui détermine la remise à zéro de tous les registres de comptage du calculateur C et qui est repérée en 0 sur la figure 3.

On observera ici que le cycle de mesure s'effectue sur essentiellement trois zones Z1, Z2, Z3 (figure 2) définies par quatre limites ou positions (A, B, C, D) prédéterminées par le calculateur C, et qui constituent les limites ou positions à l'intérieur desquelles doivent obligatoirement commencer et finir la mesure de l'étalonnage. Plus précisément, la mesure commencera obligatoirement dans la première zone Z1, en D1 par exemple, et se terminera obligatoirement dans la troisième zone Z3, en D3 par exemple, tandis que la zone intermédiaire Z2 fixe en position et en grandeur, constituera une valeur minimale de la mesure, de sorte que, grâce à cette disposition, les erreurs de mesure provenant des lectures de mesure du déplacement du piston seront négligeables puisque "noyées" dans une longueur de déplacement du piston plus importante.

Le contrôle de la fermeture du clapet 14 par le contacteur 17, transmis au calculateur C par la ligne 39, interviendra avant la première limite A de début de mesure sous peine d'invalidation de la mesure consécutive, c'est-à-dire lorsque la tête de lecture 27 franchira le point E sur la règle 26 (figure 3).

Ensuite, le début effectif de la mesure interviendra en D1 à l'apparition du premier front montant émis par le générateur d'impulsions E1, qui suit la première limite 1 sous condition de validation Le calculateur C aura prédéterminé en fonction du volume cyclique connu du compteur à étalonner un nombre d'impulsions correspondant à un nombre entier de volumes cycliques du compteur à étalonner, sous réserve que le nombre d'impulsions soit compatible avec les limites prédéterminées de fin de mesure.

Au-delà du franchissement de la dernière limite D de fin de mesure, la tête de lecture 27 franchit une position prédéterminée constante F constituant la référence de contrôle. La distance matérielle entre la référence ou position de contrôle et l'origine de toutes les mesures constitue un test d'étalonnage. Ce test permettra avantageusement de valider ou d'invalider la mesure immédiatement précédente.

A l'issue de sa course, le chariot 24 sollicite un contact (non représenté) sollicitant le système d'asservissement 16 pour ouvrir le clapet 14.

Sur la figure 1, on a montré en G l'espace séparant le début et la fin de la mesure du volume lu déterminé par le train d'impulsions émis par le générateur E1 et traité par le calculateur C. Le début de mesure 41, et la fin de mesure 42 ont permis de compter un train d'impulsions émis par la tête de lecture 27 représentant la distance parcourue par le piston-plongeur 11.

Enfin, on remarquera que le rapport des nombres d'impulsions émises par les générateurs $E_1$ et $E_2$, ce rapport étant déterminé par le calculateur C sur une grande période de temps, peut être calculé en temps masqué pendant l'exécution des mesures successives.

On a donc réalisé suivant l'invention un procédé et un système d'étalonnage d'un compteur de liquide qui permettent de réaliser un étalonnage avec une précision et une fidélité de mesure excellentes.

Bien entendu, l'invention n'est nullement limitée au mode de réalisation décrit et illustré qui n'a été donné qu'à titre d'exemple.

- On notera à ce propos que les principes de l'invention peuvent être appliqués non seulement à l'étalonnage des compteurs volumétriques, mais également à l'étalonnage des compteurs à turbine.

L'invention comprend donc tous les équivalents techniques des moyens décrits ainsi que leurs combinaisons si celles-ci sont effectuées suivant son esprit.

**Revendications**

1. Procédé d'étalonnage d'un compteur notamment volumétrique de type quelconque pour liquide et comprenant essentiellement un organe de mesure (2) et un indicateur de volume (3) relié par un système mécanique quelconque (5) engendrant nécessairement une erreur sur le volume lu sur l'indicateur (3) par rapport au volume vrai passant dans l'organe de mesure (2), cette erreur pouvant être corrigée par un système de réglage (4), caractérisé en ce qu'on établit le rapport du nombre d'impulsions produites d'une part par un premier générateur d'impulsions ($E_1$) disposé entre l'organe de mesure (2) et le système de réglage (4), et d'autre part par un deuxième générateur d'impulsions ($E_2$) entraîné par l'indicateur (3) produisant une information perturbée (1), de façon à quantifier en valeur de volume lu sur l'indicateur (3) l'information non perturbée émise par le premier générateur d'impulsions ($E_1$), pour ainsi déterminer avec le degré de précision voulu la valeur du volume lu à comparer avec le volume vrai ayant traversé l'organe de mesure (2) qui provoquera directement l'entraînement du premier générateur d'impulsions ($E_1$).

2. Procédé selon la revendication 1, caractérisé en ce que le volume de liquide traversant l'organe de mesure (2) actionne un piston coulissant dans une enceinte et dont le déplacement, matérialisant le volume vrai de liquide ayant traversé l'organe de mesure, est mesuré sur une distance comprenant trois zones ($Z_1$ $Z_2$, $Z_3$) définies par quatre limites (A, B, C, D) elles-mêmes définies par rapport à une origine de mesure de référence (0), de façon que la mesure du déplacement du piston commençant nécessairement dans la première zone et se terminant nécessairement dans la troisième zone, inclue la mesure d'une zone intermédiaire ($Z_2$) en position et en grandeur pour ainsi rendre négligeable les erreurs de mesure imputables aux lectures de mesure du déplacement du piston.

3. Dispositif d'étalonnage d'un compteur notamment volumétrique de type quelconque pour liquide, pour la mise en oeuvre du procédé selon la revendication 1 ou 2 et comprenant une enceinte (8) contenant un piston (11) et raccordable hydrauliquement à l'organe de mesure (2) du compteur (1), caractérisé en ce que ledit piston est un piston-plongeur de section transversale inférieure à celle de l'enceinte (8) et monté coulissant de façon étanche au travers d'au moins une paroi (9) montée transversalement dans l'enceinte (8) pour y définir au moins deux capacités étanches (8a, 8b).

4. Dispositif selon la revendication 3, caractérisé en ce que les deux capacités (8a, 8b), qui sont raccordables au circuit de transport (7, 13, 18) du liquide passant dans l'organe de mesure (2) du compteur (1), communiquent entre elles par au moins une conduite (13) pourvue d'au moins un clapet (14) agencé suivant l'axe de coulissement du piston (11) et permettant un écoulement progressif du liquide d'une capacité vers l'autre ou l'interruption de cet écoulement.

5. Dispositif selon la revendication 3 ou 4, caractérisé en ce que le piston précité est attelé à un premier chariot (24) coulissant sur des guides (25) parallèlement à une règle de mesure incrémentale (26), et qui peut être rappelé par un deuxième chariot motorisé (28).

6. Dispositif selon l'une des revendications 3 à 5, caractérisé par un premier générateur d'impulsions ($E_1$) directement couplé au mouvement de l'organe de mesure (2), et par un deuxième générateur d'impulsions ($E_2$) directement couplé à l'indicateur de volume (3) du compteur (1), ces deux générateurs adressant respectivement leurs informations à un calculateur (C), de même que les informations provenant de la règle de mesure précitée sont envoyées à ce calculateur.

7. Dispositif selon l'une des revendications 3 à 6, caractérisé en ce que le piston précité (11) possède une cavité intérieure (21) débouchant à l'une des extrémités du piston, laquelle extrémité est munie d'une butée (22) apte à coopérer avec le clapet (14).

8. Dispositif selon l'une des revendications 3 à 7, caractérisé en ce que le raccordement d'entrée du liquide à l'une (8b) des capacités de l'enceinte (8) est un raccordement à injection tangentielle (12).

9. Dispositif selon la revendication 4 ou 7, caractérisé en ce qu'au clapet précité (14) est associé un système de contrôle (17) de ce clapet en position de fermeture.

10. Dispositif selon l'une des revendications 3 à 9, caractérisé par un conduit (20) associé à une source de pression (S), lequel conduit communique avec l'interface entre l'ouverture (10) de la paroi (9) dans laquelle coulisse le piston (11) et la surface externe de ce piston, et débouche entre deux joints d'étanchéité (19) disposés dans ladite ouverture.

Fig. 1

Fig. 2

Fig. 3

**Office européen
des brevets**

**RAPPORT DE RECHERCHE
EUROPEENNE**

Numéro de la demande

**EP 90 40 2690**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 242 937 (AMERICAN METER CO.)<br>* Résumé; figures 1,6 *<br>— — — | 1 | G 01 F<br>25/00<br>G 01 F 15/06 |
| A | US-A-4 718 267 (CAPPER)<br>* Colonne 2, ligne 23 - colonne 3, ligne 21; figures *<br>— — — | 3,4,6,7,10 | |
| A | WO-A-8 607 146 (SKELTONHALL LTD)<br>* Figure 1 *<br>— — — | 3,7,10 | |
| A | WO-A-8 700 622 (FLOW TECHNOLOGY INC.)<br>* Page 11, ligne 32 - page 12, ligne 30; figures 1,2 *<br>— — — — — | 10 | |

**DOMAINES TECHNIQUES RECHERCHES (Int. Cl.5)**

G 01 F

Le présent rapport de recherche a été établi pour toutes les revendications

| Lieu de la recherche | Date d'achèvement de la recherche | Examinateur |
|---|---|---|
| La Haye | 04 février 91 | ROSE A.R.P. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire
T : théorie ou principe à la base de l'invention

E : document de brevet antérieur, mais publié à la
    date de dépôt ou après cette date
D : cité dans la demande
L : cité pour d'autres raisons

& : membre de la même famille, document
    correspondant